(19) Europäisches Patentamt
European Patent Office
Office européen des brevets

(11) **EP 2 713 533 A1**

(12) **EUROPEAN PATENT APPLICATION**

(43) Date of publication:
**02.04.2014 Bulletin 2014/14**

(51) Int Cl.:
***H04B 17/00*** (2006.01)

(21) Application number: **12306165.7**

(22) Date of filing: **26.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ST-Ericsson SA**
**1228 Plan-les-Ouates (CH)**

(72) Inventors:
• **Tomatis, Fabrizio**
  **06700 Saint Laurent du Var (FR)**
• **Demaj, Pierre**
  **06200 Nice (FR)**

(74) Representative: **Hirsch & Associés**
**58, avenue Marceau**
**75008 Paris (FR)**

(54) **Mobile telecommunication in a cellular network**

(57)    It is provided a method for performing mobile telecommunication in a cellular network. The method comprises communicating (S10) between a first mobile communication device and a first base station in a first cell of the cellular network, and meanwhile evaluating (S20) if a Multiple-Input Multiple-Output communication is occurring between a second mobile communication device and a second base station of a second cell, the second cell neighboring the first cell.

The method improves the field of mobile telecommunication in a cellular network.

FIG. 1

**Description**

<u>TECHNICAL FIELD</u>

The invention relates to the field of telecommunications, and more particularly to a method and a device for performing mobile telecommunication in a cellular network.

<u>BACKGROUND</u>

Mobile telecommunication in a cellular network usually involves a network of cells each comprising at least one base station (called Base Transceiver Stations in the case of GSM networks, or Node B in the case of UMTS networks based on WCDMA technology) that relays communications. Communication devices (User Equipment), including mobile communication devices such as mobile phones or laptop/tablet computers, may communicate with each other or with servers via communication with a base station of the cellular network that relays said communication.

Within this context, it is advantageous to have the highest amount of information possible on the telecommunication environment, for example to improve the way communications between a communication device and a base station is performed.

<u>SUMMARY</u>

The invention aims at improving the field of mobile telecommunications.

This object is achieved with a method for performing mobile telecommunication in a cellular network. The method comprises communicating between a first mobile communication device and a first base station in a first cell of the cellular network. The method also comprises, meanwhile, evaluating if a Multiple-Input Multiple-Output (MIMO) communication is occurring between a second mobile communication device and a second base station in a second cell of the cellular network. The second cell neighbors the first cell.

This object is also achieved with a computer program comprising instructions adapted to cause a mobile communication device to perform the method.

This object is also achieved with a mobile communication device comprising a control unit adapted to perform the method.

The invention offers many advantages, including the following:

- Thanks to evaluating if a communication is occurring between a second mobile communication device and a second base station of a second cell, the method allows the acquisition of knowledge of the telecommunication environment.
- Thanks to the evaluating being performed meanwhile the communication between the first mobile communication device and the first base station, the knowledge acquired is on telecommunication potentially impacting said communication between the first mobile communication device and the first base station.
- Thanks to the fact that the communication whose presence is evaluated is a MIMO communication, the method allows the acquisition of a specific and refined knowledge, adapted to modem cellular networks, in an efficient way.

Further features and advantages of the invention will appear from the following description of embodiments of the invention, given as non-limiting examples, with reference to the accompanying drawings listed hereunder.

<u>BRIEF DESCRIPTION OF THE DRAWINGS</u>

FIG. 1 shows flowchart of an example of the method,
FIG. 2 shows a block diagram illustrating the transmission of signals during MIMO communication in WCDMA,
FIG. 3 shows a schematic representation of an example of a communication device performing the method, and
FIG. 4 shows OVSF codes tree up to SF=8, and
FIG. 5 shows a schematic representation of an example of a mobile communication device adapted to perform the method.

<u>DETAILED DESCRIPTION</u>

It is provided a method for performing mobile telecommunication in a cellular network. The method comprises communicating between a first mobile communication device and a first base station in a first cell of the cellular network, and meanwhile evaluating if a MIMO communication is occurring between a second mobile communication device and a second base station in a second cell of the cellular network, the second cell neighboring the first cell. This improves the knowledge of the telecommunication environment impacting the communication between the first mobile communication device and the first base station.

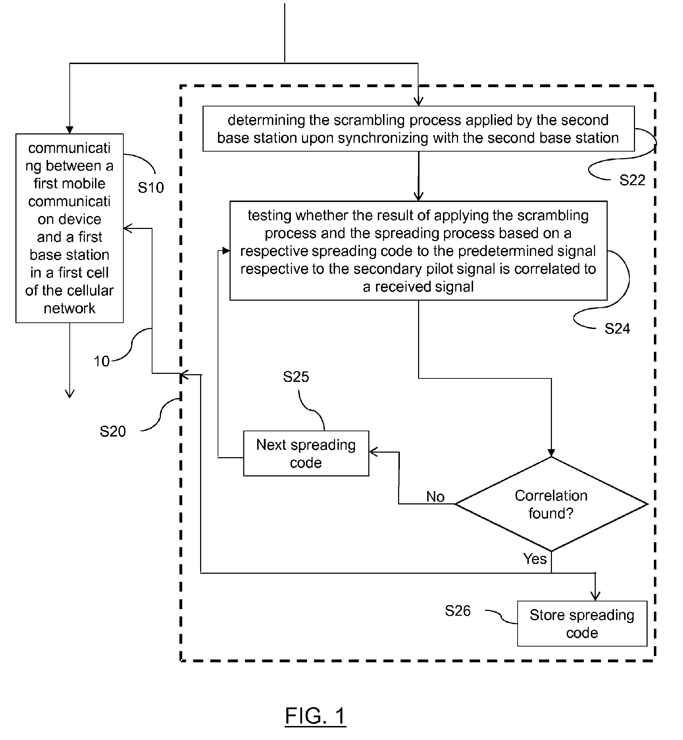

An example of the method is now discussed with reference to the flowchart of FIG. 1.

As shown on FIG. 1, the method of the example comprises communicating S10 between a first mobile communication device and a first base station in a first cell of the cellular network. In other words, step S10 involves a mobile communication device and base station which are communicating, e.g. by exchanging radio signals e.g. in response to one another, in any classical way.

The adjective "first" is used here to distinguish the mobile communication device, the base station and the cell of the cellular network that are contemplated by step S10 of the method from the mobile communication device, the base station and the cell of the cellular network that are contemplated by step S20 of the method, the adjective "second" being used for the latter. Of course, there may be one or more base station(s) per cell (at least the "first" base station for the first cell, and at least the "second" base station for the second cell) and/or more than one "second" cell, and/or there may be one or more mobile communication device(s) per cell (at least the "first" mobile communication device for the first cell, and at least the "second" mobile communication device for the second cell). Also there may be one or more first cell(s), and/or one or more second cell(s).

The second cell neighbors the first cell. This means that the second cell is within communication range from the first cell, possibly an adjacent cell. This means in general that the second cell is one of a (strictly smaller) subset of all the cells of the network that surrounds the first cell. In such a case, communication between elements within the second cell, for example between the second mobile communication device and the second base station, may be captured by elements within the first cell. Thus, the evaluating S20 may be performed by the first base station and/or the first mobile communication device.

By "mobile communication device", it is meant any User Equipment (UE) adapted to perform distant (i.e. non-wired) communication S10 with a base station of the cellular network. Any mobile communication device involved in the method may thus include a communication module (e.g. including an antenna) for performing distant communication with base stations. This includes mobile phones or cell phones, tablet computers, some laptop computers, some desktop computers.

The cellular network may be any type of known cellular networks, such as a UMTS (or CDMA) network. For the sake of communication efficiency, the contemplated cellular network is preferably a UMTS network based on WCDMA technology. In this case, any base station contemplated by the method may be any Node B adapted to serve as a base station for relaying signals in such a network.

As shown on FIG. 1, the method of the example comprises, meanwhile to the communicating S10, a step of evaluating S20 if a MIMO communication is occurring between a second mobile communication device and a second base station of a second cell. The communication occurring between the second mobile communication device and the second base station may thus be seen as part of the method as well.

The evaluating S20 outputs any information on MIMO communication occurring in a second cell. For example, the evaluating S20 may output a binary piece of information indicating whether MIMO was detected or not. Alternatively, the evaluating S20 may output soft information on such detection e.g. with probabilities attached to different states. Also, if there is effectively MIMO communication, the evaluating S20 may output characteristics of the MIMO communication, for example characteristics of a pilot signal specific to MIMO communication. In the following, the evaluating S20 may also be referred to as "detection". Also, although not represented on the figure, as communication between the second mobile communication device and the second base station may occur or stop at any time, the evaluating S20 may be repeated, either from scratch or in a smarter way (to use information from previous repetitions), the latter possibility being described later.

In any case, the evaluating S20 is performed while communication S10 is occurring, that is, in parallel, or as a background process. As a result, the evaluating S20 may provide its output information to the communicating S10, as indicated by arrow 10 on FIG. 1, and the communicating S10 may take such information into account, for example for enhancing the communication by adapting the communication S10 according to the evaluating S20.

The type of communication detected at S20 is a MIMO communication and is now discussed.

MIMO communication is an advanced antenna technique that improves the spectral efficiency and thereby boosts the overall system capacity. MIMO implies that the base station and/or the mobile communication device employ multiple antennas. MIMO techniques are now widely studied and applied in practice for downlink communications, i.e. from the base station to the mobile terminal.

In the following, a survey of MIMO techniques that are well known and used in practical systems is provided. The MIMO communication detected at S20 may be any of these techniques.

A variety of MIMO techniques or modes exist, such as Per Antenna Rate Control (PARC), selective PARC (S-PARC), transmit diversity, receiver diversity, Double Transmit Antenna Array (D-TxAA). D-TxAA is an advanced version of transmit diversity, which is already used in WCDMA standards. Irrespective of the MIMO technique, the notation ($M$ x $N$) may generally be used to represent MIMO configuration in terms number of transmit ($M$) and receive antennas ($N$). The common MIMO configurations used or currently discussed for various technologies are: (2 x 1), (1 x 2), (2 x 2), (4 x 2), (8 x 2) and (8 x 4). The configurations represented by (2 x 1) and (1 x 2) are special cases of MIMO and they correspond to transmit diversity and receiver diversity respectively.

Configuration (2 x 2) is used in WCDMA, notably release 7. In particular, WCDMA FDD release 7 supports double transmit antenna array (D-TxAA) in the downlink. The E-UTRAN downlink indeed supports several MIMO schemes including MIMO techniques including SU-MIMO and MU-MIMO. The MIMO technology has also been widely adopted in other wireless communication standards, e.g. IEEE802.16.

As known, the above-mentioned MIMO modes or other MIMO techniques enable spatial processing of the transmitted and received signals. This ability of spatial diversity generally improves spectral efficiency, extends cell coverage, enhances user data rate, or mitigates multi-user interference. In essence each MIMO technique has its own benefit. For instance the receiver diversity (1 x 2) particularly improves the coverage. On the other hand (2 x 2) MIMO such as D-TxAA would lead to increase peak user bit rate. In general a 2x2 MIMO scheme may double the data rate. The possibility to double the data rate depends on whether the channel is sufficiently uncorrelated so that the rank of the 2x2 MIMO channel matrix is 2 (the rank is the number of independent row or columns of the matrix). In general the average data rate is lower than twice the data rate achieved in single link conditions.

For example, the communications contemplated at S10 (i.e. between the first mobile communication device and the first base station) and/or the communication contemplated at S20 (i.e. between the second mobile communication device and the second base station) may comprise 2x2 MIMO and/or 2x1 MIMO communications, e.g. in HSPA and/or based on WCDMA.

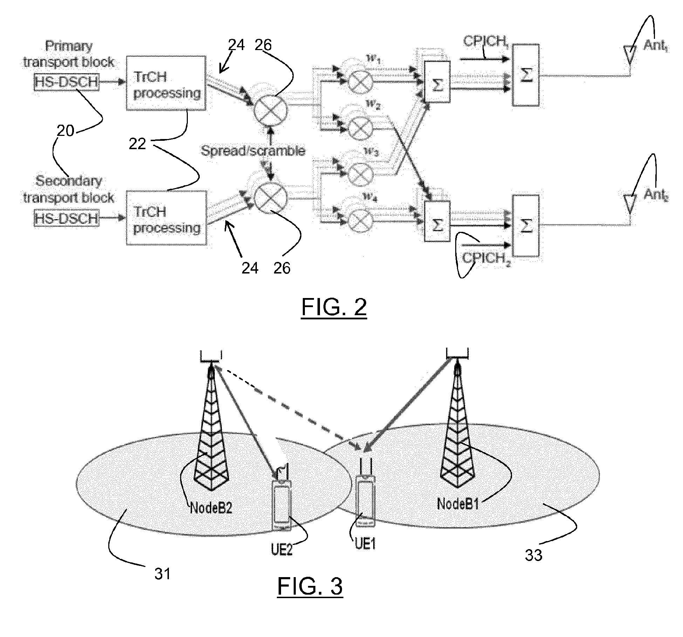

Such MIMO communication is now discussed, referring to FIG. 2, which shows how a signal comprising two transport blocks 20 (primary transport block and secondary transport block) is sent e.g. by a base station (for example, the second base station of the method), when the cellular network is based on WCDMA (the network is a WCDMA cellular network and the base stations transmitting MIMO signals are Node B base stations implementing WCDMA MIMO). In other words, the contemplated MIMO communications are based on WCDMA standards. Base stations contemplated by the method, in particular the second base station, may comprise block modules corresponding to blocks of FIG. 2 for performing the signal processing of FIG. 2, as well as at least two transmit/emitting antennas.

HSPA supports closed-loop MIMO where the UE can receive one or two transport blocks per TTI as shown on FIG. 2. For example, the two transport blocks 20 are each processed to be encoded according to the transport channel (this is represented by "transport channel processing" block modules 22), as known *per se.* The two transport blocks 20 are then sent to spread/scramble block modules 26 which perform a spreading process and a scrambling process on the signal in any way known *per se.* Precisely, replicates of each of the two transport blocks 20 are sent to the spread/scramble block modules 26 (the replicates being represented by the fact that blocks and arrows of the diagram of FIG. 2 are replicated, such as arrows 24). Basically, two codes (a scrambling code and a spreading code) may be applied to each replicate of each signal in a classical way. As defined in WCDMA, the scrambling process applied to the replicates of the primary transport block and the scrambling process applied to the replicates of the secondary transport block may be the same scrambling process. Also as known, the spreading process applied to the replicates of the primary transport block and the spreading process applied to the replicates of the secondary transport block may be different spreading processes. Also, within one cell, transport blocks (e.g. MIMO HSPA transport blocks) of a type (primary or secondary) are sent with the same scrambling process and the same spreading process.

The signals resulting from spread/scramble block modules 26 are then each duplicated. Then, weights $w_1$, $w_2$, $w_3$, $w_4$ applied to each of the duplicates. Given four corresponding duplicates, two emanating from the primary transport block and two emanating from the secondary transport block, having undergone the spread/scramble processes, a weight $w_1$ is applied to one duplicate emanating from the primary transport block and a weight $w_3$ is applied to one duplicate emanating from the secondary transport block, and the two weighted signals are then summed to be sent by fist antenna $Ant_1$. The same is performed for the other two duplicates, with weights $w_2$ and $w_4$, that are to be summed and sent by second antenna $Ant_2$. This is all known from MIMO communication in WCDMA and extensively shown on FIG. 2.

Before emission by antennas $Ant_1$ and $Ant_2$, for each antenna, all weighted sums of duplicate signals are summed together and to a respective pilot signal $CPICH_1$ or $CPICH_2$, as shown on FIG. 2. As widely known, a pilot signal is a signal emitted by the base station, possibly resulting from applying a scrambling process and a spreading process by the base station to an initial predetermined signal (e.g. defined in WCDMA standards), the pilot signal or the initial signal being known by mobiles communication devices using the network. This way, as known *per se,* broadcasting a pilot signal by a base station allows a mobile communication device to perform equalization, to estimate deformation of the signal due to the propagation channel, and/or to prepare handovers.

In the case of the discussed example of the method, the second base station is adapted to emit via at least two emitting antennas, and to continuously broadcast primary pilot signal $CPICH_1$ e.g. for any of the purposes stated above. In the case of WCDMA, primary pilot signal $CPICH_1$ is the result of applying a scrambling process and a spreading process to a primary common pilot channel (P-CPICH) signal, P-CPICH being predetermined and known by the actors of the WCDMA network. When a MIMO communication involving the two emitting antennas $Ant_1$ and $Ant_2$ is occurring, the second base station further broadcasts secondary pilot signal $CPICH_2$, as discussed with reference to FIG. 2, which is different from the primary pilot signal. In the case of WCDMA, $CPICH_2$ is the result of applying a scrambling process and a spreading process to a secondary common pilot channel (P-CPICH) signal. In any case, $CPICH_2$ is specific to MIMO communication. Thus, for a simple implementation of the method, the evaluating S20 may conveniently comprise evaluating if the second base station is emitting $CPICH_2$ (derived from S-CPICH in the case of WCDMA).

Although not represented on FIG. 2, for the sake of respecting the standards, $CPICH_1$ and $CPICH_2$ are the result of applying, by the second base station, the scrambling process and the spreading process to respective the different predetermined signals (the reference signals which are globally known as P-CPICH and S-CPICH). In other words, one reference antenna, here referred to as $Ant_1$, always broadcasts a scrambled and spread version of P-CPICH, and another antenna referred to as $Ant_2$ broadcasts a scrambled and spread version of S-CPICH when the second base station is performing MIMO in a WCDMA network. As usual in the field, it can be said, as a shortcut, that $Ant_1$ broadcasts P-CPICH and $Ant_2$ broadcasts S-CPICH (without referring to the fact it is normally scrambled and spread versions that are actually broadcast). Referring to the discussion made earlier on the scrambling and the spreading, in WCDMA networks, the scrambling process may be the same for P-CPICH and S-CPICH, while the spreading process is different for P-CPICH and S-CPICH.

As for the weights $w_1$, $w_2$, $w_3$, $w_4$, they may be determined in any way known *per se,* for example based on information contained in messages received from the uplink. For example, if a transmission is rank-1, the pre-coder control indication (PCI) value transmitted in the uplink direction via the HS-DPCCH channel is used to determine the pre-coder weight. If a transmission is rank-2 then the first stream is using the PCI value to determine the weight while the second stream uses an orthogonal weight to that of the first stream. A UE may effectively signal single stream or dual stream CQI depending on its rank determination algorithm. A Node B signals via the HS-SCCH channel the decision as to the number of transport blocks (primary only if a single stream (rank-1) transmission and primary plus secondary for rank-2 transmission) as well as the index of the primary pre-coder weight vector. The latter provides the capability for the Node B to use different pre-coder weights to the ones recommended by the UE.

The UE-MIMO receiver, i.e. the second mobile communication device of the method, or, any mobile communication device of the method, may thus comprise two receive antennas to distinguish the two MIMO streams.

FIG. 3 shows a schematic representation of an example of a communication device UE1 performing the method and is now discussed.

FIG. 3 illustrates a realistic multi-cells deployment scenario. FIG. 3 considers the simple scenario of two base stations NodeB1 and NodeB2 communicating with two mobile communication devices UE1 and UE2. UE1 and NodeB1 perform the communicating S10 in first cell 33, represented by full arrow between UE1 and NodeB1, and meanwhile UE2 and NodeB2 perform MIMO communication, represented by full arrow between UE2 and NodeB2, in second cell 31 which is neighboring first cell 33 (second cell 31 is adjacent to first cell 33 in the example). The MIMO communication between UE2 and NodeB2 may be captured by UE1, as represented by dotted line arrow from NodeB2 to UE1, and may constitute an interfering signal.

The interfering signal, may be processed as described with reference to FIG. 2, and may thus be composed of HS-DSCH data addressed to UE2, of P-CPICH after spreading and scrambling used as a reference phase signal for first antenna Ant1 of NodeB2 and of S-CPICH after spreading and scrambling used as a reference phase signal for second antenna Ant2 of NodeB2. As already mentioned, P-CPICH is transmitted continuously by NodeB2 to allow inter-cell measurements (RSCP, Ec/Io) while S-CPICH is transmitted only on specific cases and in particular in case a UE has a MIMO session activated with the NodeB2.

It is noted that the HS-DSCH data signals are MIMO encoded while the P-CPICH and the S-CPICH are not MIMO encoded and broadcasted all over the cell. The interference in the spatial direction caused to UE1 is then relatively bigger due to the P-CPICH and S-CPICH.

This scenario can be extended to the case of multiple Node Bs interfering to the reference UE (i.e. first mobile communication decvice UE1) assuming that different scrambling codes are associated to the different Node Bs. The interfering signals limit performance of the UE1 receiver to decode the desired signal, in particular when S-CPICH is used by the neighbor cell for a MIMO UE HSDPA connection. In the advanced receiver implementation, physical channel cancellation techniques are considered for improving the performance. Thus, as an example of application, to enable these cancellation techniques, the method provides detection of the S-CPICH signal (after spreading and scrambling) sent by the second base station (which is pilot signal specific to MIMO communication) thanks to the evaluating S20, and then applies a S-CPICH cancellation technique according to the evaluating S20.

It is now referred back to FIG. 1.

The evaluating S20 may be performed by any device, including the first base station and/or the first mobile communication device. However, in the example now considered, the first mobile communication device performs the evaluating S20. It is also considered in the example that the second base station performs MIMO communications according to the description of FIG. 2. Notably, the primary pilot signal and the secondary pilot signal are the result of applying, by the second base station, a same scrambling process and a different spreading process to respective different predetermined signals that are P-CPICH and S-CPICH.

In the example, the evaluating S20 comprises determining S22 the scrambling process applied by the second base station upon synchronizing with the second base station. As usual in the field of cellular networks, mobile communication devices continuously synchronize with base stations of surrounding cells, for example to prepare handovers. In the present case, the first mobile communication device has already synchronized with the first base station, which is why communication S10 is allowed, and also continuously synchronizes with base stations of neighboring cells, including the second base station. This may be performed by receiving a pilot signal (primary) continuously emitted by the second base station, e.g. P-CPICH.

In the case of WCDMA, a UE (e.g. the first mobile communication device) gets slot and frame timing of a neighboring cell using the well-known R99 channels P-SCH and S-SCH. SSCH also provides the scrambling code group. The UE checks the 8 primary scrambling codes with the detected S-SCH scrambling code group. This can be done using correlation techniques based on P-CPICH. These techniques are well known. The output of this block, a primary scrambling code is then used later in the method of the example, as will be discussed.

To summarize, in WCDMA cellular networks, as a result of always synchronizing with neighboring cells and thereby notably receiving a scrambled and spread version of P-CPICH and determining from it the scrambling code, the first mobile communication is made aware of the exact scrambling process used by the second base station to scramble P-CPICH. As the same scrambling process is used by the second base station to scramble S-CPICH, and as S-CPICH is known to the first mobile communication device (S-CPICH being predetermined and known from the standard), at this point only one parameter is missing to the first mobile communication device: the spreading process used by the second base station to spread S-CPICH (which is different from the spreading process used by the second base station to spread C-CPICH). Indeed, the spreading process respective to the secondary pilot signal (i.e. the spreading process used by the second base station to spread S-CPICH) is based on a spreading code selected by the second base station within a predetermined set of spreading codes. The predetermined set is in the case of the example provided by the WCDMA standards and comprises 256 different spreading codes (also known as OVSF codes), as will be discussed later.

The method of the example may thus simply iterate over said set a testing S24 step. This means that the method may "try" spreading codes selected within the step for a plurality of spreading codes of the predetermined set, possibly running through the whole set.

Specifically, in the method of the example, the first mobile communication device receives a signal that may (or may not) comprise a spread and scrambled version of S-CPICH sent by the second base station (addressed to the second mobile communication device). The scrambling process is known. The evaluating S20 may thus simply comprise testing S24, for a respective spreading code of the predetermined set of spreading codes (i.e. any given code of the set), whether the result of applying the scrambling process and the spreading process based on the respective spreading code to the predetermined signal respective to the secondary pilot signal (i.e. S-CPICH) is correlated to the received signal. In other words, the method evaluates similarity between the actually received signal and what the received signal would be with the hypothesis that it contains a signal resulting from the application of the surely known scrambling code and the hypothetical spreading code (i.e. the spreading code under test) to S-CPICH. If correlation is found, this indicates a MIMO communication in the second cell, based on the "respective" spreading code which was used at the testing S24. In that case the method of the example may store S26 said spreading code for later use, as discussed later, in parallel to arrow 10 (representing the evaluating S20 providing its output information to the communicating S10. If no correlation is found, this means either that no MIMO communication is occurring between the second base station and a second mobile communication device, or that the spreading code used was not correct. Thus, the method of the example can iterate the testing S24 once again with another spreading code of the predetermined set of spreading codes, and/or determine that no MIMO communication is occurring in the second cell. This is represented on FIG. 1 with a step S25 of going to a next spreading code prior to re-iterating the testing S24.

For example, the method may perform the neighbor S-CPICH detection ("neighbor S-CPICH" designates the S-CPICH sent by the second base station after spread/scramble when performing MIMO communication with a second mobile communication device) starting from the P-CPICH scrambling codes by scanning all the OVSF SF=256 codes to detect if other peaks exist. Such detection may be done by a comparison with the P-CPICH correlation and with a threshold mechanism, of which an example will be provided below. Once an SF=256 is detected and in order to discriminate this from another possible channel allocated in the cell, the channel profile corresponding to the S-CPICH may be compared to the P-CPICH channel profile in order to determine the antennas correlation. Knowing these two channels are transmitted from two different antennas in case of MIMO, the method may compare the correlation with a threshold. If a S-CPICH is detected, the power received on the channel is then monitored. Considering that the power allocated to the S-CPICH is the same as the one allocated to the P-CPICH, the interference might reach a significant level. Knowing that the S-CPICH is only allocated in case of a MIMO dedicated communication, the S-CPICH channel is then a discontinuous channel. The S-CPICH power is then continuously monitored, to detect the presence or the absence, e.g. only in case of dedicated communication S10 established by the first UE with serving NodeB (i.e. the first base station). This information may then be used to enable or disable S-CPICH cancellation techniques, known *per se* and not discussed in details in the present description, or for other purposes discussed later.

(Each iteration of) the testing S24 may determine correlation upon a result above a predetermined threshold being provided when determining a received signal code power (RSCP) of the received signal on the result of applying the scrambling process and the spreading process (based on the respective spreading code) to the predetermined signal respective to the secondary pilot signal (i.e. S-CPICH). In other words, considering the result obtained after applying on S-CPICH the scrambling process determined at S22 and the spreading process based on the spreading code of the list under use in the current iteration of S24, if the received signal has an RSCP determined on the result above a predetermined threshold, defined in any way by the skilled person, then it is considered that there is correlation. Otherwise, it is considered that there is no correlation.

As already discussed, the second cell's scrambling process is known as an output of a cell search/monitoring procedure performed continuously by first UE. Thus, the problem may translate into detecting energy/propagation paths on all OVSF 256 sequences with SF=256. This is quite equivalent as building a searcher on S-CPICH. The testing S24 may take a particular OVSF code (with a certain order for searching on the OVSF codes), shift it in time (with certain limitations on the search space) and correlate it with the received signal. Output at any correlation instant may be considered as path power or noise. This may be repeated on all OVSF 256 sequences.

The detector may thus be a sequences correlator and can be indicated as (e.g. the testing S24 comprises performing the below calculation):

$$y_{j,k} = \sum_{i=1}^{256} r_{i+k} \cdot OVSF_{i,j} \cdot SCPICH_i \cdot SCR_i$$

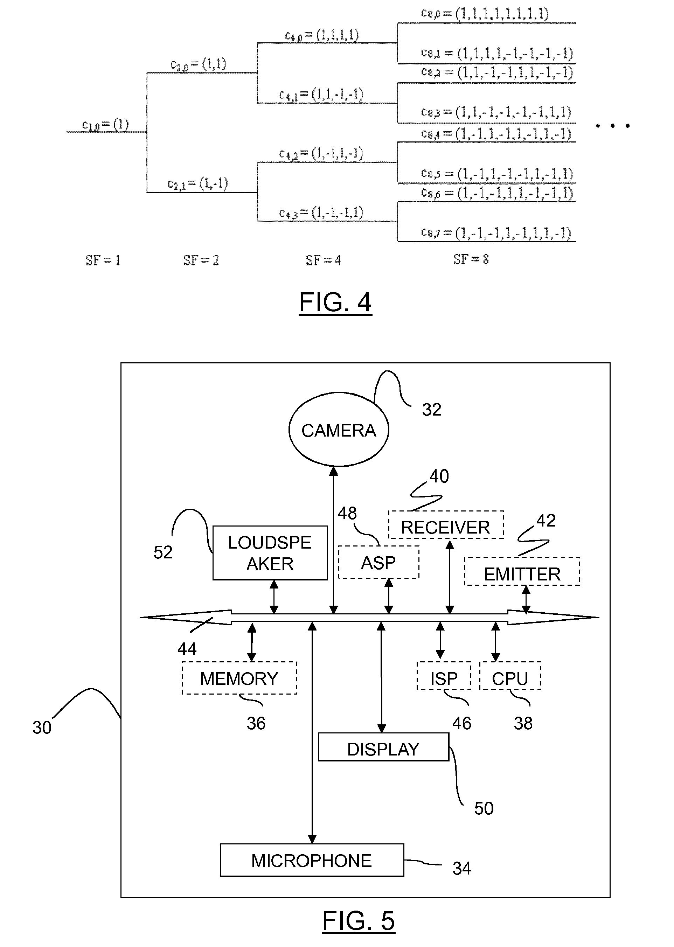

Where $y_{j,k}$ is the detector output corresponding to the $j^{th}$ OVSF sequence with SF = 256, $r_{i+k}$ is the received sample and $k$ indicates the shift in time (sample number) corresponding to the time synchronization alignment on the second antennas. S-CPICH and SCR are known sequences at the receiver. The OVSF sequences tree may be as indicated on FIG. 4, which provides OVSF codes tree up to SF = 8.

For computing the total energy received on the second antennas, the method may use the a priori known time synchronization on the first antennas. Let us consider $k$ as the shift compared to the time synchronization on the first antenna. The search algorithm may proceed in the following order for computing the correlation scanning: first $k = 0$ starting with the same timing corresponding to the most probable main path synchronization time, and then moving away sample by sample from $k = 0$ in the following way: $k=0 \rightarrow 1 \rightarrow -1 \rightarrow 2 \rightarrow -2 \rightarrow 3 \rightarrow -3 \rightarrow N \rightarrow -N$.

The method may assume to stop the search at $N$ samples distance. $N$ determines the scanning interval and can be considered programmable to be determined based on propagation environment statistics. In order to reduce the complexity of the search the method may keep $N$ as small as possible.

The scanning operation would then provide all the multipath energy corresponding to the total received energy on the neighbor S-CPICH (i.e. the S-CPICH sent by the second base station after spreading and scrambling).

In one example, a CFAR (Constant False Alarm Rate) threshold can be applied on the output buffer total energy to determine a level above which a peak is actually a path. The CFAR threshold may be computed based on the noise estimation.

In another example, the method can compute the CFAR threshold using the correlation computed on a non-existing path known a priori. Then any peak above the noise level may be considered as a path. The sum of all the path powers provides the total energy for the neighbor S-CPICH. From now on, it is called "neighbor S-CPICH RSCP", for the sake of convenience.

As previously indicated the detector may then be compared with a threshold in order to determine if a S-CPICH is present or not.

$$SCPICH\_RSCP_j = \sum_{k=-N}^{N} \left( y_{j,k} \ge CFAR_{thr} \right)$$

This operation is repeated for every $j$ corresponding to a different OVSF code with SF=256.

Since computing S-CPICH energy on all the 256 OVSF codes can be long, the method may perform the search like discussed below to make the evaluating S20 faster.

The method may iterate the testing (S24) over the predetermined set, following a predetermined order of the predetermined set, the predetermined order being according to a likelihood of a spreading code to be used by the second base station to spread the predetermined signal respective to the secondary pilot signal (i.e. S-CPICH).

For example, the method may start with lower index OVSF. Although it is not stated explicitly in 3GPP standard, S-CPICH is likely to use one of the first 16 OVSF code number in order to avoid potential interference with own cell HS-DSCH channels. SF256 OVSF 0 is already reserved for P-CPICH, while SF256 OVSF 1 is dedicated to PCCPCH, so the method may start the search at OVSF 2.

As soon as a candidate OVSF code gives a neighbor S-CPICH RSCP greater than the threshold, which may be a predetermined value *Th_ovsf* and/or a value derived from the RSCP of the retrieved P-CPICH broadcast by the second base station, e.g. P-CPICH RSCP / *K_ovsf* (*K_ovsf* being typically, as an example, equal to 10), the neighbor S-CPICH OVSF is found (its path propagations are also available) and as a consequence an interfering neighbor S-CPICH is detected. From now on, this condition is called "criteria 1". This OVSF detection needs to be done once per neighboring cell. However once the S-CPICH OVSF is found, the method may compute its power periodically.

This example of the method allows to blindly (that is without any a priori information) detect the presence and the OVSF code of a neighbor cell S-CPICH.

As discussed above, two solutions may be retained for the threshold:

$$SCPICH\_RSCP_j \geq Th\_ovsf$$

$$SCPICH\_RSCP_j \geq PCPICH\_RSCP / K\_ovsf$$

Another approach is possible but only applies to a MIMO UE (in other words, the first communication device is adapted to perform MIMO).

In this approach, the spreading code used by the first communication device at the testing S24 is retrieved from a memory, the first communication device having previously performed MIMO communication with the second base station during a previous presence of the first communication device in the second cell. This makes the method faster and more efficient.

This approach is simple and may be completed by the previous blind algorithm. It is based on the fact that a MIMO UE, that has already set-up a MIMO transfer within a given cell, necessarily knows if this cell uses a S-CPICH and its OVSF code. Thus this UE can store in a table the cell identification (which can be typically its frequency, its UARFCN and its primary scrambling code) associated with an information on its S-CPICH: ON/OFF and OVSF number. At any moment the UE can control its table and periodically check if one or several cells among its neighbors is sending S-CPICH after spreading it with the stored OVSF number

**[0069]** Now, as previously mentioned, the method may further comprise stopping the iteration when the testing (S24) determines correlation for a given spreading code of the predetermined list. The method may then periodically repeat the testing S24 with the last spreading code (the one used last during the iterations, i.e. before stopping). This way, the first communication device continuously verifies whether the MIMO communication previously detected is still present.

As a result of periodically repeating the testing S24, the method may determine disappearance of correlation (e.g. the MIMO communication previously detected has ceased). This indicates the end of the MIMO communication in the second cell. Such determination of the disappearance of correlation may be performed upon the RSCP having been determined to be below a new predetermined threshold.

The test with the new predetermined threshold can be performed once.

Or the method may require it to be verified a predetermined number of times strictly higher than once in order to declare disappearance of the correlation. Also, the other predetermined threshold (the new one, i.e. for determining disappearance of correlation) may be lower than the predetermined threshold for determining correlation. This all ensures robustness of the method against fading effects.

Indeed, the S-CPICH is a discontinuous channel: as soon as all MIMO UE communication stops the S-CPICH could be stopped. It is therefore not preferred to detect the neighbor S-CPICH only once. This process is preferably performed regularly in time. The S-CPICH can be stopped but it can also happen that, locally in time, due to unfavorable fading realization, S-CPICH is attenuated too much, that is so that its received power does not meet criteria 1. In this case S-CPICH would not be detected while actually present. The algorithm for S-CPICH interference cancellation could take these two cases into account. The method may thus ensure not be too reactive, otherwise as soon as signal fades due to multipath, e.g. interference cancellation would be disabled. But the method may be reactive enough to detect when the neighbor cell stops S-CPICH.

To be robust to fading dips, the method may thus use a non-symmetric approach: as soon as neighbor S-CPICH OVSF is detected and S-CPICH RSCP is greater than *Th_enable* (greater or equal to *Th_ovsf)* and a dedicated communication is in place, then the evaluating S20 is positive, and e.g. an S-CPICH cancellation is enabled. Then, S-CPICH cancellation is disabled only if at least one of the following conditions is met:

- the dedicated communication S10 with serving cell (first base station) stops, or
- the S-CPICH RSCP is lower than *Th_disable* for a number *Noc* of consecutive times.

This hysteresis approach allows being robust to fading. *Th_enable* and *Th_disable* may be a function of S-CPICH RSCP variance measure. In order to avoid ping-pong effect, they may be different, typically *Th_disable* being between 2 and 3dB lower than *Th_enable. Noc* may be strictly higher than 1, and chosen large enough to provide robustness to fading dips. Channel coherence time can be in the range of 15 UMTS frames at low speed. Typically, with *Noc* = 5, measurements are enough if they are distant of at least 15 frames.

Now, applications of the evaluating S20 are briefly discussed.

As already stated previously, the evaluating S20 may provide any type of information on MIMO communication occurring in the second cell, first including the actual fact of such MIMO communication occurring or not. With the examples provided above, the evaluating S20 may also lead to the determination, by the first mobile communication device, of the scrambling process and/or the spreading process applied by the second base station on S-CPICH. Such information may come from the first mobile communication device determining an RSCP of the S-CPICH sent by the second base station (i.e. the RSCP of the received signal on the result of applying the scrambling and spreading processes, corresponding to the second base station, on S-CPICH). Indeed, in the examples discussed above, the testing S24 may include determining said RSCP. It is also noted that an RSCP of the P-CPICH sent by the second base station is also determined, as known *per se,* for example for preparing handovers. This is for example done when the first mobile communication device synchronizes with the second base station.

As already mentioned a few times, such information may be used for communicating S10 with the first base station, e.g. to cancel the interferences caused by the second base station. In other words, knowing the S-CPICH sent by the second base station and its RSCP, the first mobile communication device may cancel the interferences due to the MIMO communication occurring in the second cell, following schemes known *per se* in the prior art.

Other applications of the method are also possible.

For example, it is known that a mobile communication device continuously estimates the quality of the cells neighboring the one in which it is currently communicating. Here, the first communication device continuously estimates the quality of the second cell. The method enhances such estimation.

Usually, said estimation is performed by evaluating the RSCP of the P-CPICH sent by the second base station. Thanks to the examples of the method, the first mobile communication device further estimates the quality of the second cell bytaking into account the determined S-CPICH. For example, the method may further comprise determining the sum of a determined RSCP of the P-CPICH (sent by the second base station after spread/scramble) and a determined RSCP of the S-CPICH sent by the second base station (after spread/scramble). The estimation takes advantage of further information being available, and is thus more accurate. The method thus facilitates handovers and enhances communications.

Indeed, if a S-CPICH is detected on the neighboring cell (i.e. the second cell), it can be used to refine this cell's quality estimation. Usually, and as known *per se,* cell quality is estimated in terms of P-CPICH RSCP and Ec/No measurement. If a S-CPICH is detected, its power may be taken into account in cell quality estimation. A possible method would be to consider a total cell RSCP equal to the sum of P-CPICH RSCP and S-CPICH RSCP and then report it to the Node B. More than just gathering all the pilot power, summing P-CPICH RSCP and S-CPICH RSCP provides more robustness to fading in particular if both propagation channels are reasonably different.

In an example, P-CPICH and/or S-CPICH RSCP can be filtered before reporting to the network. The filter bandwidth may be adjusted with respect to the DL channel coherence time. Therefore filtering can further improve robustness to fading and minimize measurements variance.

In addition or in an alternative, P-CPICH and/or S-CPICH can be weighted differently before reporting to the network. In particular due to channel variations, signal to noise ratio that can change quite rapidly in time, if one measure P-CPICH RSCP or S-CPICH RSCP is obviously less reliable, one can decide to underweight it.

The method may be performed based on a computer program comprising instructions for performing the method, e.g. adapted to cause a mobile communication device to perform the method. The program may be executable on a programmable device. The program may be directly executable or may require compilation to be executable. The application program may be implemented in a high-level procedural or object-oriented programming language, or in assembly or machine language if desired. In any case, the language may be a compiled or interpreted language. The program may be a full installation program, or an update program. In the latter case, the program is an update program that updates a programmable device, previously programmed for performing parts of the method, to a state wherein the device is suitable for performing the whole method.

The program may be recorded on a data storage medium. The data storage medium may be any memory adapted for recording computer instructions. The data storage medium may thus be any form of nonvolatile memory, including by way of example semiconductor memory devices, such as EPROM, EEPROM, and flash memory devices; magnetic disks such as internal hard disks and removable disks; magneto-optical disks; and CD-ROM disks.

As already stated, the method may be performed by a mobile communication device. The device may comprise a control unit adapted to perform the method. For example, the device comprises a memory having recording thereon the above program, and a processor coupled with the memory and with a communication module of the device. The communication module may comprise a receiver and an emitter. The control unit may comprise the memory and the processor. Possibly, the control unit is removable from the device.

The mobile communication device may comprise hardware memory, including volatile and/or non-volatile memory. Such memory is accessible by at least one processor, e.g. a Central Processing Unit (CPU) of the device. In an example, the device may further comprise audio convertors and transducers, such as digital to analog convertor (DAC) and a loudspeaker. In such a case, the device is adapted to play a numeric audio signal. The device may further comprise a graphical user interface, such as a sensitive screen or a screen and keyboard.

The device may perform communication, e.g. communication S10 with the first base station, and communication that are parts of the evaluating S20, including receiving signals sent by the second base station. The device may thus comprise a signal emitter and a signal receiver. For example, the device may be a telephone. The device may be a wireless communication system. The device is mobile (i.e. transportable). The device may for example be a mobile phone (e.g. a cell phone). Thus, the device may allow performing phone calls.

It is referred to FIG. 5 which shows a block diagram representing an example of a mobile communication device 30, which may be a mobile phone, adapted to perform the method.

In the example, device 30 may be used for capturing audio and image data. For this, device 30 comprises camera 32 and microphone 34 for respectively capturing image and audio data. Device 30 also comprises memory 36 which may comprise volatile and non-volatile memory (not distinguished on the figure). Memory 36 may be divided in several compartments, possibly physically apart in system 30. Memory 36 stores, recorded thereon, instructions for performing the method, possibly already compiled or pre-compiled. Device 30 also comprises processors including CPU 38, Image Signal Processor 46 (ISP) and Audio Signal Processor 48 (ASP). These processors access data through bus 44, process the data and circulate the data through the bus 44. Of course, fewer than three processors may physically be embodied, e.g. if one processor accomplishes all computations. On the other hand, more than three processors may physically be embodied, e.g. in the case of parallel processing. Device 30 also comprises display 50 and loudspeaker 52 for outputting data, i.e. for respectively displaying image data and playing audio data. Device 30 also comprises receiver 40 and emitter 42, which are for communicating with the exterior e.g. with other systems, e.g. first base station and second base station.

**Claims**

1. A method for performing mobile telecommunication in a cellular network, comprising:

   - communicating (S10) between a first mobile communication device (UE1) and a first base station (NodeB1) in a first cell (33) of the cellular network, and meanwhile
   - evaluating (S20) if a Multiple-Input Multiple-Output (MIMO) communication is occurring between a second mobile communication device (UE2) and a second base station (NodeB2) in a second cell (31) of the cellular network, the second cell neighboring the first cell.

2. The method of claim 1, wherein the evaluating (S20) comprises evaluating if the second base station is emitting a pilot signal ($CPICH_2$) specific to MIMO communication.

3. The method of claim 2, wherein the second base station is adapted to emit via at least two emitting antennas ($Ant_1$ and $Ant_2$), to continuously broadcast a primary pilot signal ($CPICH_1$), and to broadcast a secondary pilot signal ($CPICH_2$) different from the primary pilot signal when a MIMO communication involving the two emitting antennas is occurring, the pilot signal specific to MIMO communication being the secondary pilot signal.

4. The method of claim 3, wherein:

   - the primary pilot signal ($CPICH_1$) and the secondary pilot signal ($CPICH_2$) are the result of applying, by the second base station (NodeB2), a same scrambling process and a different spreading process to respective different predetermined signals (C-CPICH, S-CPICH), and

- the evaluating (S20) comprises determining (S22), by the first mobile communication device (UE1), the scrambling process applied by the second base station (NodeB2) upon synchronizing with the second base station.

5.  The method of claim 4, wherein:

    - the spreading process respective to the secondary pilot signal is based on a spreading code selected by the second base station within a predetermined set of spreading codes, and
    - the evaluating (S20) further comprises testing (S24), by the first mobile communication device, for a respective spreading code of the predetermined set of spreading codes, whether the result of applying the scrambling process and the spreading process based on the respective spreading code to the predetermined signal respective to the secondary pilot signal (S-CPICH) is correlated to a received signal, thereby indicating a MIMO communication in the second cell.

6.  The method of claim 5, whether the testing (S24) determines correlation when a result above a predetermined threshold is provided when determining a received signal code power (RSCP) of the received signal on the result of applying the scrambling process and the spreading process based on the respective spreading code to the predetermined signal respective to the secondary pilot signal (S-CPICH).

7.  The method of claim 6, wherein the testing (S24) is iterated over the predetermined set.

8.  The method of claim 7, wherein the iteration is stopped when the testing (S24) determines correlation for a given spreading code of the predetermined list, and the method then comprises periodically repeating the testing (S24) with the last spreading code.

9.  The method of claim 8, wherein, as a result of periodically repeating the testing (S24), the method determines disappearance of correlation, thereby indicating an end of the MIMO communication in the second cell, after the RSCP has been determined to be below another predetermined threshold once or a predetermined number of times strictly higher than once.

10. The method of claim 9, wherein the other predetermined threshold for determining disappearance of correlation is lower than the predetermined threshold for determining correlation.

11. The method of any of claims 3-10, wherein the cellular network is a WCDMA cellular network, the primary pilot signal is the result of applying a scrambling process and a spreading process to a primary common pilot channel (P-CPICH) signal, and the secondary pilot signal is the result of applying a scrambling process and a spreading process to a secondary common pilot channel (S-CPICH) signal.

12. The method of claim 11, wherein the first mobile communication device further estimates the quality of the second cell by determining the sum of a determined RSCP of the P-CPICH and a determined RSCP of the S-CPICH sent by the second base station.

13. The method of claim 12, wherein the sum is filtered and/or weighted.

14. Computer program comprising instructions adapted to cause a mobile communication device to perform the method of any of claims 1-13.

15. Mobile communication device comprising a control unit adapted to perform the method of any of claims 1-13.

communicati
ng between a
first mobile
communicati          S10
on device
and a first
base station
in a first cell
of the cellular
network

10

S20

determining the scrambling process applied by the second
base station upon synchronizing with the second base station

S22

testing whether the result of applying the scrambling
process and the spreading process based on a
respective spreading code to the predetermined signal
respective to the secondary pilot signal is correlated to
a received signal

S24

S25

Next spreading
code

Correlation
found?

No

Yes

S26          Store spreading
code

FIG. 1

FIG. 2

FIG. 3

$c_{8,0} = (1,1,1,1,1,1,1,1)$

$c_{4,0} = (1,1,1,1)$

$c_{8,1} = (1,1,1,1,-1,-1,-1,-1)$

$c_{2,0} = (1,1)$

$c_{8,2} = (1,1,-1,-1,1,1,-1,-1)$

$c_{4,1} = (1,1,-1,-1)$

$c_{8,3} = (1,1,-1,-1,-1,-1,1,1)$

$c_{1,0} = (1)$

$c_{8,4} = (1,-1,1,-1,1,-1,1,-1)$

· · ·

$c_{4,2} = (1,-1,1,-1)$

$c_{8,5} = (1,-1,1,-1,-1,1,-1,1)$

$c_{2,1} = (1,-1)$

$c_{8,6} = (1,-1,-1,1,1,-1,-1,1)$

$c_{4,3} = (1,-1,-1,1)$

$c_{8,7} = (1,-1,-1,1,-1,1,1,-1)$

SF = 1         SF = 2         SF = 4              SF = 8

## FIG. 4

## FIG. 5

Europäisches
Patentamt

European
Patent Office

Office européen
des brevets

# EUROPEAN SEARCH REPORT

Application Number

EP 12 30 6165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2006/209761 A1 (MOSHAVI SHIMON [IL] ET AL) 21 September 2006 (2006-09-21)<br>* paragraph [0008] - paragraph [0009]; figure 1 *<br>* paragraph [0011] - paragraph [0012] *<br>* paragraph [0019] * | 1-4,<br>11-15<br>5-10 | INV.<br>H04B17/00 |
| Y<br>A | WO 03/019808 A2 (QUALCOMM INC [US]) 6 March 2003 (2003-03-06)<br>* paragraph [1028] *<br>* paragraph [1033] *<br>* paragraph [1039] - paragraph [1044]; figure 4 *<br>* paragraph [1047] - paragraph [1059]; figure 5 * | 5-10<br><br>1-4,<br>11-15 | |
| A | "3rd Generation Partnership Project; Technical Specification Group Radio Access Network; Physical channels and mapping of transport channels onto physical channels (FDD) (Release 11)",<br>3GPP STANDARD; 3GPP TS 25.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,<br>vol. RAN WG1, no. V11.0.0,<br>15 December 2011 (2011-12-15), pages 1-60, XP050555012,<br>[retrieved on 2011-12-15]<br>* section 5.3.3.1.1 - section 5.3.3.1.2 * | 1-15 | TECHNICAL FIELDS SEARCHED (IPC)<br><br>H04B |

-/--

The present search report has been drawn up for all claims

| Place of search | Date of completion of the search | Examiner |
|---|---|---|
| The Hague | 8 January 2013 | Riposati, Benedetto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EUROPEAN SEARCH REPORT

Application Number

EP 12 30 6165

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "3rd Generation Partnership Project; Technical Specification Group Radio Access Network; Spreading and modulation (FDD) (Release 11)", 3GPP STANDARD; 3GPP TS 25.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V11.1.0, 7 March 2012 (2012-03-07), pages 1-43, XP050579990, [retrieved on 2012-03-07] * section 5.2.1 - section 5.2.2 * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 8 January 2013 | Riposati, Benedetto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

**EP 2 713 533 A1**

## ANNEX TO THE EUROPEAN SEARCH REPORT
## ON EUROPEAN PATENT APPLICATION NO.

EP 12 30 6165

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2013

| Patent document cited in search report | | | Publication date | Patent family member(s) | | | Publication date |
|---|---|---|---|---|---|---|---|
| US 2006209761 | A1 | | 21-09-2006 | AT | 417415 | T | 15-12-2008 |
| | | | | CN | 1643803 | A | 20-07-2005 |
| | | | | EP | 1470652 | A1 | 27-10-2004 |
| | | | | US | 2003142732 | A1 | 31-07-2003 |
| | | | | US | 2006209761 | A1 | 21-09-2006 |
| | | | | WO | 03063373 | A1 | 31-07-2003 |
| WO 03019808 | A2 | | 06-03-2003 | CA | 2458271 | A1 | 06-03-2003 |
| | | | | EP | 1419586 | A2 | 19-05-2004 |
| | | | | JP | 4382479 | B2 | 16-12-2009 |
| | | | | JP | 2005501467 | A | 13-01-2005 |
| | | | | RU | 2290757 | C2 | 27-12-2006 |
| | | | | US | 2003039228 | A1 | 27-02-2003 |
| | | | | WO | 03019808 | A2 | 06-03-2003 |

EPO FORM P0459

For more details about this annex : see Official Journal of the European Patent Office, No. 12/82

17